Europäisches Patentamt

(19) European Patent Office

Office européen des brevets

(11) Numéro de publication: **0 278 797**
**B1**

(12) **FASCICULE DE BREVET EUROPEEN**

(45) Date de publication du fascicule du brevet: **30.01.91**

(51) Int. Cl.⁵: **H 05 H 1/32, H 05 H 1/34**

(21) Numéro de dépôt: **88400053.0**

(22) Date de dépôt: **12.01.88**

(54) **Torche de travail à l'arc.**

(30) Priorité: **13.01.87 FR 8700256**

(43) Date de publication de la demande:
**17.08.88 Bulletin 88/33**

(45) Mention de la délivrance du brevet:
**30.01.91 Bulletin 91/05**

(84) Etats contractants désignés:
**AT BE CH DE ES FR GB GR IT LI LU NL SE**

(56) Documents cités:
**EP-A-0 157 702**
**EP-A-0 193 456**
**FR-A-2 379 224**
**FR-A-2 534 106**
**FR-A-2 534 107**

(73) Titulaire: **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cédex 07 (FR)**
(84) **ES GR IT SE**

(73) Titulaire: **LA SOUDURE AUTOGENE FRANCAISE**
**75, Quai d'Orsay**
**F-75007 Paris (FR)**
(84) **BE CH DE FR GB LI LU NL AT**

(72) Inventeur: **Delzenne, Michel**
**222, rue du Général Leclerc**
**F-95130 Franconville (FR)**

(74) Mandataire: **Sadones Laurent, Renée et al**
**L'AIR LIQUIDE 75, quai d'Orsay**
**F-75321 Paris Cédex 07 (FR)**

Courier Press, Leamington Spa, England.

## Description

La présente invention est relative à une torche de travail à l'arc selon le préambule de la revendication 1.

Certaines torches de travail à l'arc, par exemple la torche de coupage plasma manuelle commercialisée par la Société La Soudure Autogène Français sous le marque Nertajet Zip, sont équipées d'une coiffe comprenant une jupe de forme générale annulaire entourant à distance le nez de la torche. La jupe, qui canalise autour de la tuyère d'éjection du plasma un courant d'air comprimé de refroidissement, est en matière thermoplastique, ce qui permet de lui conférer, par injection, une forme relativement complexe, et d'obtenir une bonne résistance mécanique.

La présente invention se propose d'améliorer encore cette coiffe, notamment de façon à allonger sa durée de vie sans affecter ses propriétés mécaniques. En effet, la coiffe est soumise au rayonnement de l'arc, à la radiation thermique de la tuyère et aux projections de métal fondu.

A cet effet, l'invention a pour objet une torche du type précité, caractérisée en ce qu'elle comprend les caractéristiques de la partie caractérisante de la revendication 1.

De préférence, la buse fait saillie au-delà du nez de la torche. La buse, grâce à sa forme de révolution, constitue alors un organe de guidage capable de suivre n'importe quel gabarit de coupe ou de soudage.

Dans l'application de l'invention aux torches de coupage plasma refoidies par un courant gazeux, il est avantageux que la jupe comporte des ouïes d'aspiration d'air ambiant. Le fort débit de gaz de refroidissement ainsi créé forme en effet un coussin gazeux très favorable à l'assise et au glissement de la torche pendant la coupe.

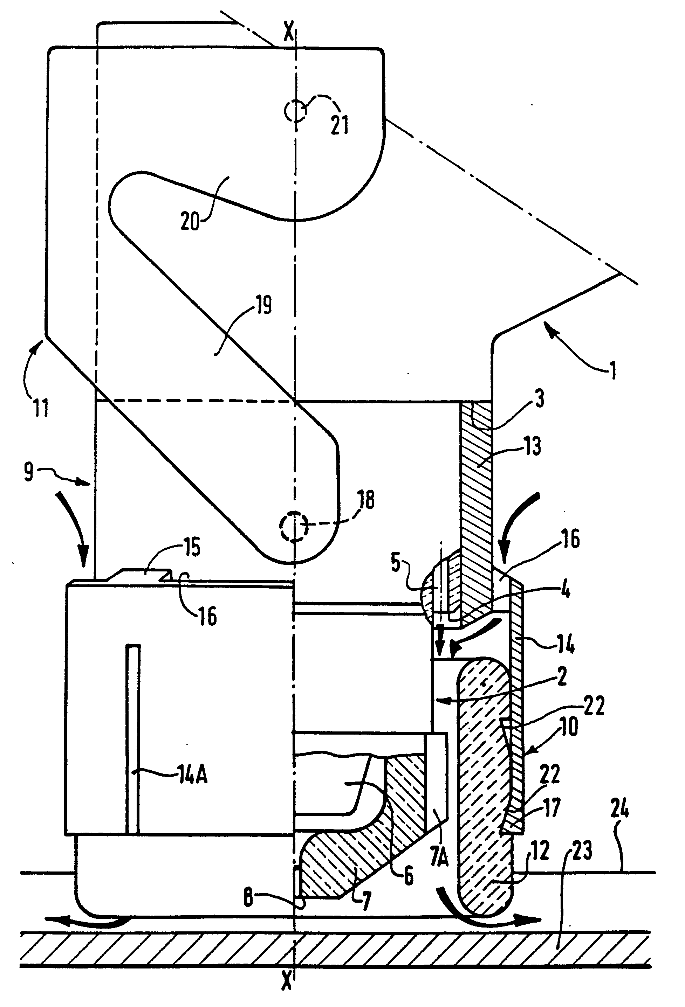

Un example de réalisation de l'invention va maintenant être décrit en regard du dessin annexé, sur lequel la figure unique représente, en vue extérieure dans sa moitié gauche et en coupe axiale dans sa moitié droite, un nez de torche équipé d'une coiffe conforme à l'invention.

On a représenté partiellement au dessin le corps 1 d'une torche de coupage plasma dans laquelle un courant unique d'air comprimé est divisé, à l'intérieur du corps 1, en un courant de gaz plasmagène et en un courant de gaz de refroidissement. La partie d'extrémité de ce corps forme un nez 2 d'axe X—X supposé vertical qui forme à son extrémité supérieure un premier épaulement 3 et, à peu près à mi-longueur, un second épaulement 4, et qui est fileté à son extrémité libre inférieure. Une série de perçages 5 parallèle à l'axe X—X, servant à la sortie du gaz de refroidissement, débouchent sur l'épaulement intermédiare 4. Une électrode 6 est montée dans le nez 2 du corps de torche.

Une tuyère 7 en forme de coupelle, présentant un orifice axial 8 pour la sortie du jet de plasma ainsi que des ailettes longitudinales 7A sur sa surface périphérique extérieure, est vissée sur l'extrémité inférieure du nez 2 et entoure à distance l'électrode 6. L'ensemble du nez 2 et de la tuyère 7 forme le nez de la torche.

La structure interne du corps de torche est décrite en détail dans le brevet FR—A—2.534.106. Avec une alimentation unique en air comprimé, elle assure la division de ce gaz, suivant un rapport de débits sensiblement constant, entre un courant d'air plasmagène qui sort par l'orifice 8 et un courant d'air de refroidissment qui sort par les perçages 5.

Pour guider l'air de refroidissement autour du nez de la torche, et donc assure un bon refroidissement de la tuyère, et pour guider la torche dans de bonnes conditions pendant les opérations de coupage, le nez de la torche est équipé d'une coiffe amovible 9 constituée de trois pièces, à savoir une jupe 10 en matière thermoplastique, un plastron ou étrier basculant 11 également en matière thermoplastique, et une buse 12 en matière réfractaire, notamment céramique.

La jupe 10 comprend une partie supérieure annulaire 13 qui s'enfile avec un léger jeu sur la partie supérieure du nez 2 jusqu'à buter sur l'épaulement supérieur 3. Dans cette position, l'extrémité inférieure de cette partie 13 se trouve à peu près au niveau de l'épaulement intermédiaire 4. La jupe comprend également une partie inférieure 14 de forme générale annulaire dont l'extrémité supérieure entour avec un jeu notable l'extrémité inférieure de la partie supérieure 13. Des nervures radiales 15 relient les parties 13 et 14 de la jupe, de sorte que des ouïes 16 sont ménagées entre les nervures 15. La partie inférieure 14 est fendue à partie de son extrémité inférieure, suivant des fentes verticales 14A régulièrement espacées sur le pourtour, de façon à former plusieurs griffes élastiques. De plus, cette partie 14 a une épaisseur constante sur presque toute sa hauteur, sauf à son extrémité inférieure, qui s'épaissit vers le bas et vers l'intérieur suivant une forme trapézoïdale pour former un bourrelet 17.

Le plastron 11 est identique à celui décrit dans le brevet FR 2.523.107. Il est articulé en deux points diamétralement oposés de la partie 13 de la jupe au moyen de deux ergons 18 prévus aux extrémités des deux branches d'une fourche oblique 19, le sommet de cette fourche étant relié au milieu d'un demi-cylindre horizontal 20. Les extrémités de ce demi-cylindre s'encliquettent sur deux ergots 21 diamétralement opposés en saillie sur le corps de torche en fermant un circuit d'alimentation électrique de la torche, comme décrit en détail dans le brevet français en question.

La buse 12 est un tronçon tubulaire à extrémités arrondies done le diamètre intérieur est nettement supérieur au diamètre extérieur du nez de la torche et dont le diamètre extérieur est à peu près égal au diamètre intérieur de la partie inférieure 14 de la jupe 10. Elle est, dans cet exemple, réalisée en nitrure de silicium $Si_3N_4$.

Deux gorges annulaires 22, symétriques l'une par rapport à l'autre et conjugées du bourrelet 17, sont creusées dans la surface extérieure de la buse. Ainsi, la buse est mise en place par emboîtement dans la partie 14 de la jupe jusqu'à encliquetage du bourrelet 17 dans la gorge 22 inférieure. Comme on le voit, la présence des deux gorges 22 permet la mise en place de la buse dans l'un ou l'autre sens. La buse entoure alors complètement la tuyère 7 et s'étend vers le haut jusqu'à une petite distance de l'épaulement 4 du corps de torche, et elle fait légèrement saillie au-delà de la face d'extrémité libre de la tuyère. En décalant le plan de symétrie des deux gorges 22 par rapport au plan médian de la buse, on obtient deux hauteurs de saillie différentes de la buse par rapport à la tuyère. Ces deux hauteurs peuvent correspondre à deux longueurs d'arc différentes, pour deux puissances électriques différentes de la torche, notamment pour le doupage manuel. En variante, dans l'une des deux positions, la hauteur de saillie peut être nulle, ou même négative, notamment dans le cas d'une torche de coupage automatique.

En service, la torche est utilisée pour couper une pièce métallique 23 suivant une ligne définie par un gabarit 24 posé sur cette pièce et dont la husteur est inférieure à celle sur laquelle la buse 12 dépasse de la jupe 10. L'air de refoidissement, guidé dans le passage à section réduite défini entre le nez de torche et la buse 12, crée par effet de venturi une aspiration d'air ambiant par les ouïes 16, ce qui en augmente nettement le débit, par exemple de l'ordre de 50%. Ce fort débit s'échappe entre la buse et la pièce 23 en créant un effet de coussin d'air qui assure le glissement aisé de la torche sur la pièce 23 et donne une bonne assise à la toche; ainsi, on obtient une coupe bien perpendiculaire à la surface à découper et une avance régulière de la torche, et donc une coupe de qualité.

Par ailleurs, la torche s'appuie par la buse 12 sur le gabarit 24 quelle que soit la forme de celui-ci, grâce à la configuration de révolution de la buse. Il est à noter que la torche pourrait également s'appuyer sur un gabarit par la jupe 10, avec toutefois une précision peut-être moindre.

La buse 12 forme en outre un bouclier thermique entre la tuyère et la partie 14 de la jupe, c'est-à-dire entre la partie la plus chaude de la torche et la partie en regard de la jupe. Cette dernière est ainsi protégée des dégradations d'origine thermique. Inversement, la jupe en matière thermoplastique protège la buse en céramique contre les chocs.

L'invention peut également s'appliquer à d'autres types de torches de travail à l'arc, par exemple à des torches de soudage par points ou de soudage automatique par divers procédés TIG (Tungstène Inert Gas) ou plasma, auxquels cas le gaz guidé par la coiffe est un gaz de protection de la soudure.

**Revendications**

1. Torche de travail à l'arc comportant une coiffe (9) comprenant une jupe (10) en matière plastique de forme générale annulaire adaptée pour être montée sur le corps de la torche et entourant alors à distance le nez (2, 7) de la torche, caractérisée en ce qu'une base (12) de forme générale tubulaire s'emboîte dans l'extrémité libre de la jupe (10), et que ladite buse (12) est constituée d'une matière réfractaire et espacée radialement du nez de la torche.

2. Torche suivant la revendication 1, caractérisée en ce que la buse (12) fait saillie au-delà du nez (2, 7) de la torche.

3. Torche suivant l'une des revendications 1 et 2, caractérisée en ce que la buse (12) et la jupe (10) comportent des reliefs d'encliquetage conjugués (17, 22).

4. Torche suivant l'une quelconque des revendications 1 et 3, caractérisée en ce que l'extrémité libre de la buse (12) forme un arrondi.

5. Torche suivant l'une quelconque des revendications 1 et 4, caractérisée en ce que la buse (12) est réversible.

6. Torche suivant la revendication 5, caractérisée en ce que la saillie de la buse (12) au-delà de la jupe (10) est différente dans les deux positions de la buse.

7. Torche suivant l'une quelconque des revendications 1 et 6, pour torche de coupage à plasma refroidie par un courant gazeux, caractérisée en ce que la jupe (10) comporte des ouïes (16) d'aspiration d'air ambiant.

8. Torche selon la revendication 1, de coupage à plasma, refroidie par un courant gazeux, caractérisée en ce que la tuyère (7) du nez comporte des ailettes (7A) sur sa périphérie.

**Patentansprüche**

1. Lichtbogenarbeitsbrenner, welcher eine Haube (9) umfaßt, welche eine Schürze (10) aus Kunststoff in allgemeiner Ringform aufweist, so angepaßt, daß sie auf den Körper des Brenners montiert wird und dann in einem Abstand die Nase (2, 7) um den Brenner läuft, eine Düse (12) in allgemeiner Rohrform wird in das freie Ende der Schürze (10) eingesteckt, wobei die besagte Düse (12) aus feuerfestem Werkstoff besteht und im radialen Abstand zur Nase des Brenners angeordnet ist.

2. Brenner gemäß Anspruch 1, dadurch gekennzeichnet, daß die Düse (12) über die Nase (2, 7) des Brenners hinausragt.

3. Brenner gemäß einem der Ansprüche 1 und 2, dadurch gekennzeichnet, daß die Düse (12) und die Schürze (10) verbundene Einrastwülste (17, 22) aufweisen.

4. Brenner gemäß irgendeinem der Ansprüche 1 bis 3, dadurch gekennzeichnet, daß das freie Ende der Düse (12) eine Rundung bildet.

5. Brenner gemäß irgendeinem der Ansprüche 1 und 4, dadurch gekennzeichnet, daß die Düse (12) umkehrbar ist.

6. Brenner gemäß dem Anspruch 5, dadurch gekennzeichnet, daß die Auskragung der Düse (12) über die Schürze (10) hinaus in den beiden Stellungen der Düse unterschiedlich ist.

7. Brenner gemäß irgendeinem der Ansprüche 1 und 6, für einen mit einem Gasstrom gekühlten Plasma-Schneidbrenner, dadurch gekennzeichnet, daß die Schürze (10) Ansaugöffnungen (16) für die Umgebungsluft aufweist.

8. Brenner gemäß Anspruch 1 für Plasmaschneiden, gekühlt durch einen Gasstrom, dadurch gekennzeichnet, daß die Düse (7) der Nase an ihrem Umfang Rippen (7A) aufweist.

## Claims

1. An arc torch having a cap (9) comprising a skirt (10) of plastics material of generally annular shape adapted to be mounted on the torch body and surrounding and spaced from the nose (2, 7) of the torch, characterized in that a nose piece (12) of generally tubular shape fits into the free end of the skirt (10) and in that the said nose piece (12) is composed of a refractory material and is spaced radially from the nose of the torch.

2. A torch according to claim 1, characterized in that the nose piece (12) projects beyond the nose (2, 7) of the torch.

3. A torch according to any one of claims 1 and 2, characterized in that the nose piece (12) and the skirt (10) comprise conjugate interengaging reliefs (17, 22).

4. A torch according to any one of claims 1 to 3, characterized in that a free end of the nose piece (12) has a rounded shape.

5. A torch according to any one of claims 1 to 4, characterized in that the nose piece (12) is reversible.

6. A torch according to claim 5, wherein the extent of projection of the nose piece (12) beyond the skirt (10) is different in the two positions of the nose piece (12).

7. A torch according to any one of claims 1 to 6, for a plasma cutting torch cooled by a gaseous flow characterized in that the skirt (10) comprises ports (16) for drawing in ambient air.

8. A plasma cutting torch according to claim 1 cooled by a gaseous flow, characterized in that the nozzle (7) of the nose includes fins (7A) on its periphery.

EP  0 278 797  B1

1